# EUROPEAN PATENT APPLICATION

(11) **EP 2 226 735 A1**
(43) Date of publication of application: **08.09.2010**
(21) Application number: 08867748.9
(22) Date of filing: 16.12.2008
(51) Int. Cl.: G06F 17/50, D04B 1/00, D04B 21/00, D04B 35/00

(54) **KNIT SIMULATION DEVICE AND METHOD FOR CORRECTING THREAD TWIST IN KNIT SIMULATION**

(30) Priority: 27.12.2007 JP 2007336383
(71) Applicant: Shima Seiki Manufacturing., Ltd., Wakayama-shi Wakayama 641-0003 (JP)
(72) Inventor: FUKUDA, Tetsuya, Wakayama-shi Wakayama 641-0003 (JP)
(74) Representative: Wagner, Karl H.
(86) International application number: PCT/JP2008/072884
(87) International publication number: WO 2009/084427

(57) **Abstract**

Simulation is performed of a knit fabric that is knitted according to design data in such a manner that individual threads are displayed three-dimensionally. A plurality of nodes(p) that denote thread positions in a fabric loop (111, 112, 143, 144) are obtained per loop; thread cross-sections are disposed with respect to the obtained nodes(p); and the disposed cross-sections are connected to each other at corresponding portions between the cross-sections. Twist between the corresponding portions is detected then, whereupon twist detection, non-corresponding portions between the cross-sections are connected to each other, to modify thereby the connections between the cross-sections. Unnatural thread twist can be eliminated thus in the simulation.

## Description

The present invention relates to knit simulation, and more particularly to correction of twist in a thread that makes up a loop.

The applicants have developed simulation devices for knit fabric (Patent document 1: JP 2005-240213 A). In a simulation device for knit fabric, the finished fabric is simulated in accordance with design data of the fabric, and, for instance, the state of the fabric fitted to a human body is displayed in three dimensions. Patent document 2: US 6880367 B illustrates a loop model used in a simulation, wherein a loop comprises a plurality of nodes, and the loop is formed by connecting the nodes with thread. Patent document 3: JP 3887404 B discloses plating knitting. Plating, which bears no direct relationship with knit simulation, is a knitting method in which a plurality of threads are aligned and knitted. Plating can be controlled so that any of the aligned threads appear at the front of the fabric, and some are hidden on the rear side of the fabric. Doing so allows controlling the color of the fabric. When simulating plating, thus, the front-rear relationship of the threads must be taken into account owing to the dissimilar color of the threads at the front and the rear.

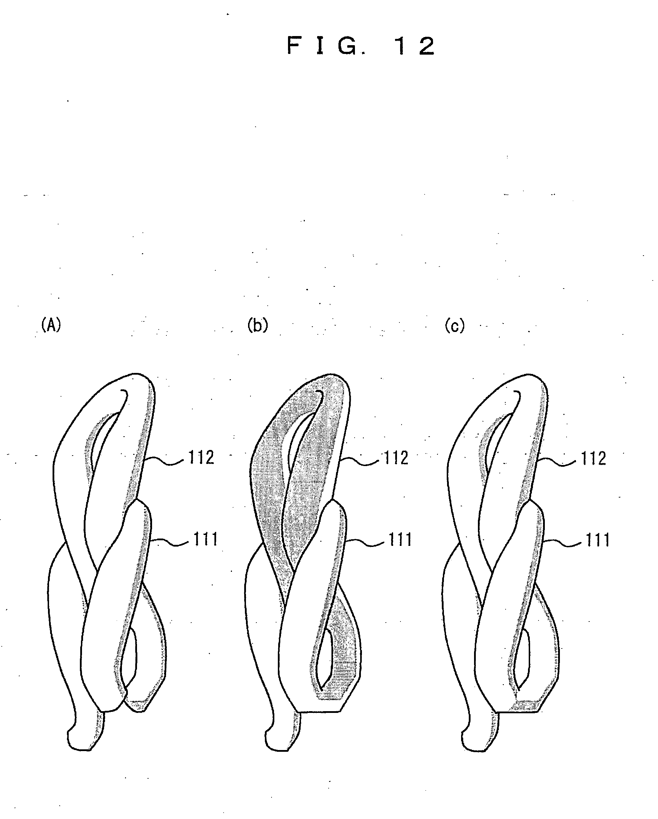

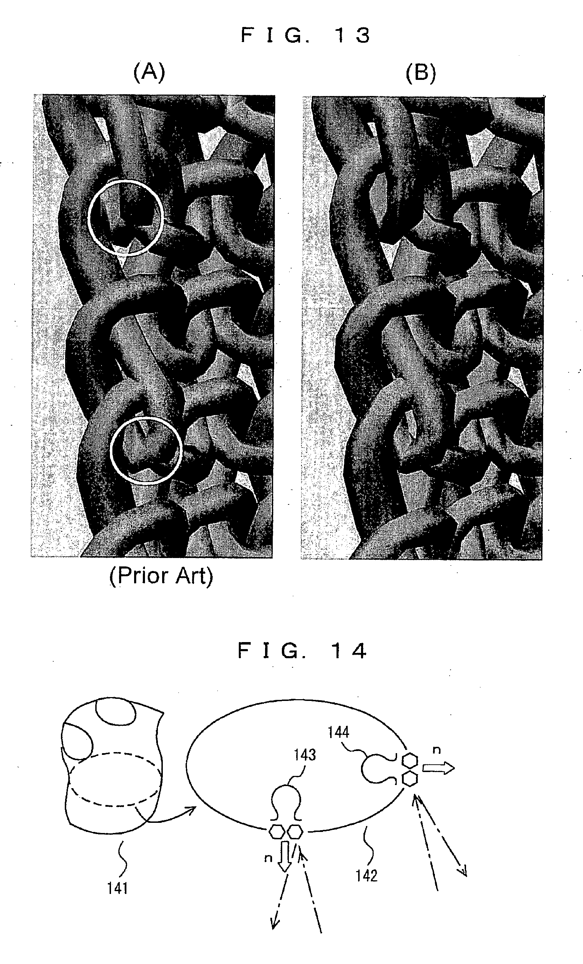

Independently from the above, the inventors have found that thread twists unnaturally in knit simulations. Fig. 12(A) and Fig. 13(A) illustrate examples of thread twist. Twist occurs at sites where the thread bends in the vertical direction. In actual fabrics, the orientation of the thread cross-section rotates gradually at thread twist sites. No thread twist occurs thus at one site, since the thread cross-section does not change abruptly at that site. Thread twist is a simulation phenomenon, not a phenomenon that occurs in actuality. Thread twist elicits a strange impression, as in Fig. 13(A), when the thread flow is checked carefully. Unnatural thread twist must therefore be corrected. Thread ply is conceptually different from thread twist. In high-speed knitting simulations, thread must be represented as a single polyhedron, and thus thread ply is ordinarily not represented.
Patent document 1: JP 2005-240213 A
Patent document 2: US 6880367 B
Patent document 3: JP 3887404 B

A problem in the present invention is to correct thread twist in knit fabric simulation.

The present invention is a knit simulation device that simulates a knit fabric that is knitted according to design data in such a manner that individual threads of the fabric are three-dimensionally displayed, the knit simulation device being characterized by comprising:
means for obtaining, per one loop, a plurality of nodes that denote thread positions in a loop of the fabric;
cross-section disposing means for disposing a respective cross-section of the thread at each node;
connection means for connecting the disposed cross-sections to each other at corresponding portions between the cross-sections;
detection means for detecting twist between the corresponding portions; and
twist elimination means for, upon twist detection, connecting to each other non-corresponding portions between the cross-sections, or for rotating one cross-section to connect corresponding portions to each other.

The present invention is a also knit simulation method for simulating a knit fabric that is knitted according to design data in such a manner that individual threads of the fabric are three-dimensionally displayed, the method being characterized by comprising:
obtaining, per one loop, a plurality of nodes that denote thread positions in a loop of the fabric;
disposing a respective cross-section of the thread at each node;
connecting the disposed cross-sections to each other at corresponding portions between the cross-sections;
detecting twist between the corresponding portions; and
upon twist detection, connecting to each other non-corresponding portions between the cross-sections, or for rotating one cross-section to connect corresponding portions to each other.

Preferably, the cross-sections are polygonal shapes, the connection means connects to each other the same vertices of the polygonal shapes, and the twist elimination means connect to each other different vertices of the polygonal shapes.
More preferably, there is further provided a rotation means for rotating the polygonal shape in accordance with the orientation of thread in a loop; and the detection means detects twist in the form of a sudden change of the orientation of the polygonal shapes at or beyond predetermined conditions.

Yet more preferably, there is further provided means for modifying the orientation of a basic polygonal shape, to which the polygonal shape is referred, in accordance with a normal direction of the loop, and the rotation means rotate the basic polygonal shape in accordance with the orientation of thread in the loop, to yield the polygonal shape at the cross-section.

In the present description, the features relating to the simulation device apply without modification also to the method for detecting thread twist in simulation. Likewise, the features relating to the simulation method apply to the simulation device.

In the present invention, thread twist is detected and corrected during knit simulation; and hence the invention affords accurate simulation and can be used in cases where thread flow is to be checked thread by thread.

Using polygonal shapes as thread cross-sections allows representing the thread easily in the form of polygons. By connecting to each other different vertices of the polygonal shape, the front and rear of the thread are easily prevented from reversing, also during simulation of plating. Thread twist can be detected in the form of a sudden change in the orientation of the polygonal shapes between cross-sections.
The orientation of the polygonal shapes of cross-sections, for instance on the front and side faces of a tubular fabric, changes when there is modified the orientation of the basic polygonal shape, which is a reference of the polygonal shape at the cross-section, along the normal direction of the loop. This affords a more realistic view of the thread after shading.

Fig. 1 is a block diagram of a knit simulation device in an embodiment;
Fig. 2 is a flowchart illustrating an algorithm of knit simulation in an embodiment;
Fig. 3 is a flowchart illustrating an algorithm for setting polygon vertex positions in a loop, in an embodiment;
Fig. 4 is a continuation of the flowchart of Fig. 3;
Fig. 5 is a flowchart illustrating an algorithm for generating a polygonal prism in an embodiment;
Fig. 6 is a diagram illustrating a loop model in an embodiment;
Fig. 7 is a diagram illustrating the relationship between four vectors, namely a normal n, tangent t, binormal bn and fourth vector f, in an embodiment;
Fig. 8 is a diagram illustrating rotation of a basic polygonal shape having vertices v1 to v6, on the basis of the positions of nodes P1 to P11 of a loop, in an embodiment;
Fig. 9 is a diagram illustrating a normal vector of a loop, and rotation and translation of a basic polygonal shape, in an embodiment;
Fig. 10 is a diagram illustrating affine transformation of a basic polygonal shape in an embodiment;
Fig. 11 is a diagram illustrating a thread twist mechanism in a simulation;
Fig. 12 is a set of diagrams illustrating thread twist correction in an embodiment, wherein (A) depicts and example of thread twist, (B) depicts an example in which cross-section polygonal shapes are rotated by 180° and are connected in such a manner that same vertices of cross-section polygonal shapes are connected to each other; and
   (C) depicts an example in which opposing vertices are connected to each other across two cross-section polygonal shapes;
Fig. 13 illustrates knit simulation results, wherein (A) depicts a conventional example without thread twist correction, and (B) illustrates an example with thread twist correction;
Fig. 14 is a diagram illustrating the orientation of a basic polygonal shape in various portions of a garment in an embodiment;
Fig. 15 is a diagram illustrating knit simulation results upon correction of the orientation of a basic polygonal shape in accordance with loop orientation;
Fig. 16 is a diagram illustrating knit simulation results upon processing of the orientation of a basic polygonal shape independently from loop orientation; and Fig. 17 is a diagram illustrating thread twist in a simulation of a mesh pattern.

- 2: knit simulation device
- 4, 6: bus
- 8: color monitor
- 9: manual input
- 10: disk drive
- 11: disk
- 12: network interface
- 14: color printer
- 16: knit design unit
- 18: data converter
- 20: front end processor
- 22: general-purpose memory
- 24: program memory
- 26: memory
- 28: simulator
- 30: polygon vertices allocator
- 31: normal generator
- 32: tangent generator
- 33: binormal generator
- 34: rotation processor
- 35: twist detector
- 36: polygon generator
- 40: rendering unit
- 60: node model
- 61: wire frame model
- 62: rendering model
- 111, 112: loop
- 141: tubular garment
- 142: circumference
- 143, 144: loop
- A: affine transformation matrix
- t: tangent vector
- n: normal vector
- bn: binormal vector
- f: fourth vector
- ⊥: perpendicular symbol
- x: vector product
- p: node
- a: loop base
- v: vertex of a cross-section polygonal shape

Optimal embodiments for carrying out the invention are explained below.

### Embodiments

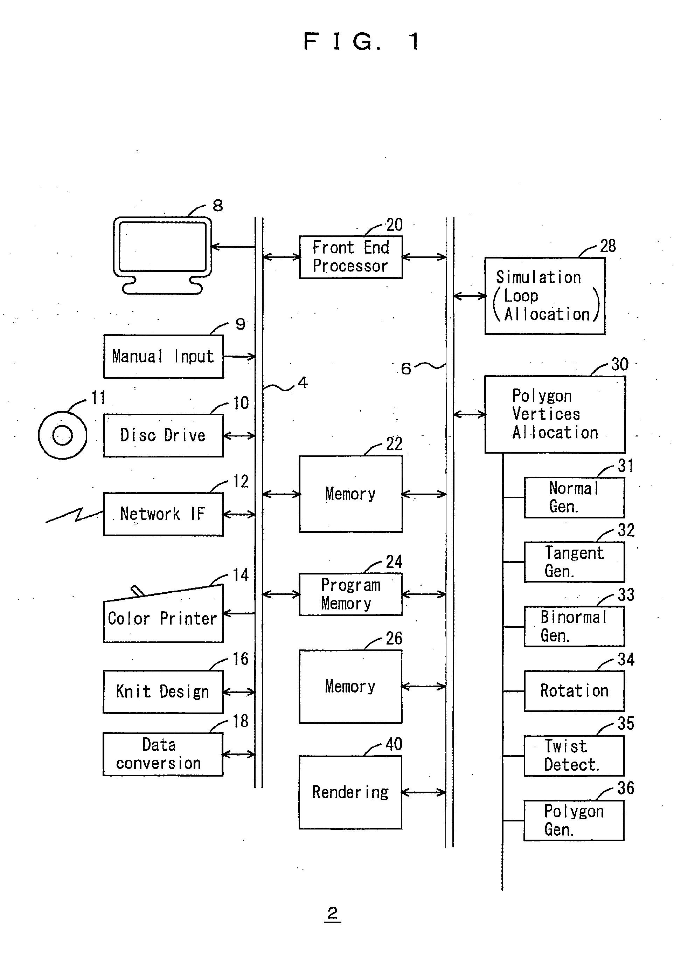

Embodiments are illustrated in Figs. 1 to 16. Fig. 1 illustrates a structure of a knit simulation device 2. In the figure, the reference numerals 4, 6 denote each a bus, the bus 4 being a bus for handling, for instance, input and output data, commands and ordinary data, and the bus 6 being a bus for image data. The reference numeral 8 denotes a color monitor on which images of a knit fabric obtained by simulation are displayed; the reference numeral 9 denotes a manual input in the form of a keyboard, a stylus, a joystick, a trackball or the like. The reference numeral 10 denotes a disk drive for input and output of data to/from a disk 11 such as a CD-ROM or the like. The simulation program required for the knit simulation device 2 is supplied, for instance, from the disk 11 and is stored in a program memory 24. Data such as programs, simulation results and the like, are exchanged with a LAN, Internet or the like by way of a network interface 12. A color printer 14 prints the images obtained in the simulation.

A knit design unit 16 designs a knit fabric that is to be simulated. A data convertert 18 converts the obtained design data into knitting data that enables knitting by a knitting machine such as a flat knitting machine. A front end processor 20 manages input and output, and issues commands to, for instance, a simulation unit 28. A general-purpose memory 22 stores various data. The program memory 24 stores, for instance, a simulation program. A memory 26 stores mainly image data.

The simulation unit 28 simulates the finished state of a knit fabric, in particular an apparel knit garment, on the basis of knitting data obtained by the data conversion unit 18, or design data obtained by the knit design unit 16. The simulation involves, for instance, simulating a human body model wearing a knit garment, in three-dimensional space, or simulating the knit garment placed on a flat base, without any human body model, or simulating the knit garment hanging on a clothes hanger or the like.

The simulation unit 28 simulates the way in which each stitch i.e. each loop of the knit fabric is disposed in the knit fabric, in three-dimensional space. The simulation method itself is arbitrary, and may involve simulation of the stable state of a knit fabric on the basis of, for instance, a model in which each loop is treated as a mass point. Alternatively, more simply, there may be simulated the stable state of a virtual garment that results from sewing together virtual sheets having a rigidity identical to that of the various parts of a knit fabric, and/or having weight and a coefficient of friction against a human body model. Since loop positions relative to the sheet are known, the position of each loop can be elucidated if the stable state of the sheet is known. The position of a loop includes the base and the tip of the loop. Loop position is envisaged in three-dimensional space.

A polygon vertices allocation unit 30 allocates a plurality of polygon vertices for each loop, i.e. for each stitch of the knit fabric. A polygon generation unit 36 generates a polygon in such a way so as to joint the allocated polygon vertices. Knit loops can thus be represented as a plurality of polygons. The position of each loop node is determined on the basis of, for instance, the position of the base and tip of the loop, and the connection relationship with loops to the left and right. There is a plurality of nodes for each loop. Knowing the nodes allows elucidating the plane at which the loop is situated. A normal generation unit 31 generates a normal vector n that is perpendicular to the loop.

A tangent vector t, as a tangent of the loop at each node, is a line that joins the node of interest and a previous a subsequent node. The tangent vector is generated by a tangent generation unit 32. Once the normal vector n and the tangent vector t are generated, the vector product thereof is used by a binormal generation unit 33 to generate a binormal vector bn. In addition, the binormal generation unit 33 generates a fourth vector f that is orthogonal to the tangent vector t and the binormal vector bn. The magnitude of the normal vector n, the tangent vector t, the binormal vector bn and the fourth vector f is that of one unit vector.

A rotation processing unit 34 generates a rotation matrix A on the basis of the tangent vector bn, the binormal vector bn and the fourth vector f. The position coordinates of the loop base are added to the rotation matrix A, to generate thereby an affine transformation matrix. The cross-section of the loop can be represented by a polygonal shape that is called a basic polygonal shape. This shape is stored in, for instance, the memory 22. In the affine transformation matrix obtained by the rotation processing unit 34, the basic polygonal shape is rotated and is translated in such a manner that the center of the polygonal shape coincides with a loop node. The node portions can be represented thereby as a thread cross-section: The polygonal shape that represents the thread cross-section at each node will be called a cross-section polygonal shape. The polygonal shape on the basis of which the cross-section polygonal shape is generated is referred to as the basic polygonal shape.

A polygon is generated between the nodes through connection of cross-section polygonal shapes between the respective nodes. This connecting involves mutually connecting the same vertices of the cross-section polygonal shapes. A twist detection unit 35 detects, for instance, whether the orientations of the binormal vectors bn across adjacent nodes differ by, for instance, 90° or more, to detect thread twist thereby. In the absence of twist, the polygon generation unit 36 connects the same vertices of the cross-section polygonal shapes, across adjacent nodes. When twist is detected, the vertices of a cross-section polygonal shape at one node are connected to opposing vertices of the cross-section polygonal shape of another node, to eliminate twist thereby. Through the above process, each loop is represented as a plurality of polygons.

A rendering unit 40 renders the created polygons. In rendering, the texture, thickness, fluff, color and so forth of the thread may be rendered on the basis of texture mapping. Texture data on the thread is stored then, for instance, in the memory 22. Reflection of light coming from a light source is visualized by shading. Shadow is imparted, and polygons that are invisible from the point of view are eliminated, to create thereby a color display image. The meaning of the main reference numerals used in the present description is given in the cross-section on brief description of the reference numerals.

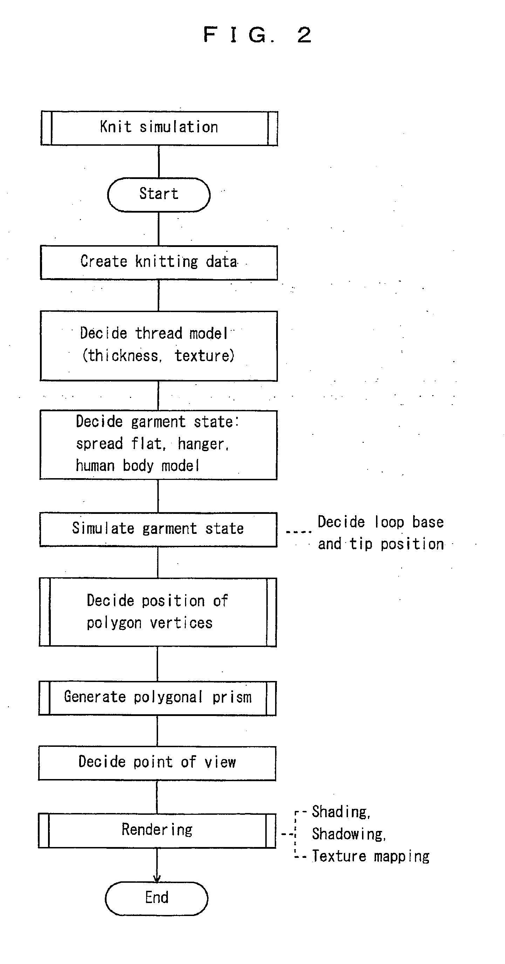

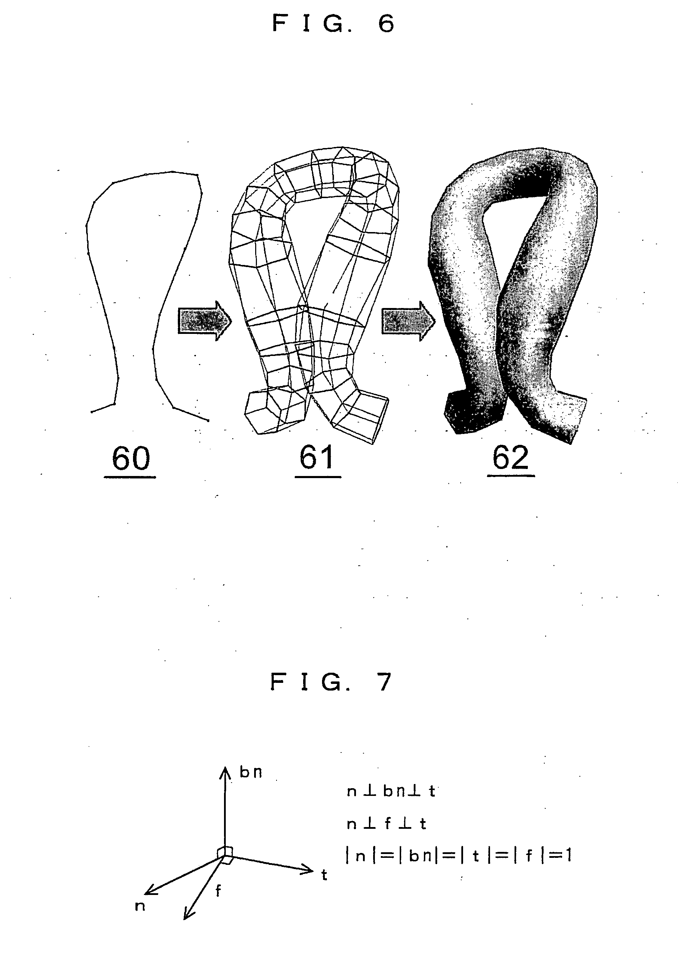

Figs. 2 to 5 illustrate a simulation algorithm in the embodiment. The explanation refers to the hardware configuration of Fig. 1, and also to the specific examples described in Figs. 6 to 16. Knitting data of a knit fabric such as a garment or the like is created by the knit design unit 16 and the data conversion unit 18. Independently from the above, a thread model is inputted via the disk drive 10, the network interface 12 or the like. The thread model includes, for instance, thickness, texture, color, fluff and so forth. The thread model is separate from the basic polygonal shape. The size of the basic polygonal shape may be set to vary for instance on the basis of the thickness of the thread in the thread model. The simulation conditions are decided next. For instance, it is decided whether the knit garment is to be laid flat, or hanging from a clothes hanger or the like, or is to be fitted to a human body model. The state of the garment is then simulated by the simulation unit 28. The positions of the bases and the tips of the loops are determined as a result.

Herein there are determined the positions of the vertices of the polygons for representing the loop. Polygons are created on the basis of vertex positions. The loop is represented by mutually connecting, at the nodes, the polygonal prisms, namely prism-shaped members whose surface is covered by the polygons. The point of view is determined, and the display image is created through rendering and is outputted via the color monitor 8 or the color printer 14.

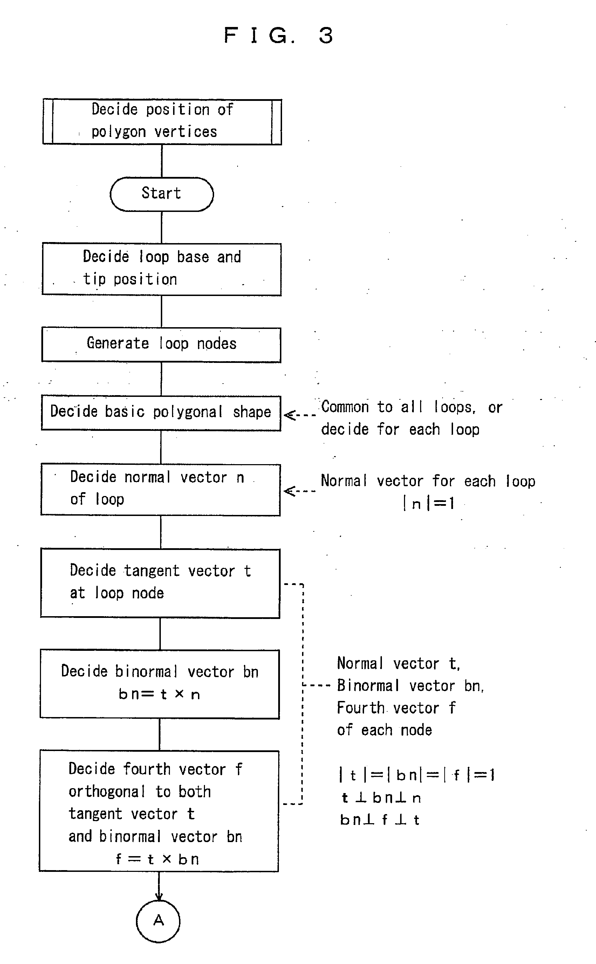

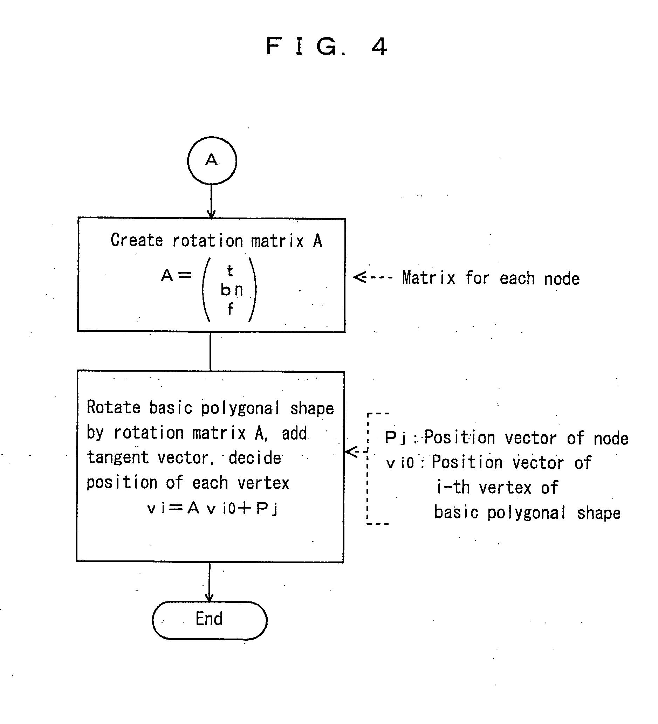

Figs. 3 and 4 illustrate determination of the position of polygon vertices. The position of the base and the tip of each loop is determined once the state of the garment is simulated The loop model stored in the memory 22 or the like is called, in accordance with, for instance, a vector from the base to the tip, and/or a plane that includes the surrounding stitches. The model contains a description of the node position with respect to the base and the tip. The node position is disposed on a plane that includes the loop. Loop nodes are generated thus as described above. A common basic polygonal shape may be generated for all the loops when the cross-section of thread is represented by a basic polygonal shape, and the same thread is common to the entire garment. A basic polygonal shape may also be generated for each loop, but herein the basic polygonal shape is generated for each thread that is actually used.

The polygon vertices allocation unit 30 generates the basic polygonal shape. The normal generation unit 31 generates the normal vector n that is orthogonal to the loop. The normal vector n, whose magnitude is 1, is present for instance at each loop. In a better approximation, however, the orientation of the normal vector n may be determined depending on the position of the loop on the circumference of a tubular garment. In this case, vertically linked loops have for instance a common normal vector n.

A tangent vector t is determined for each loop node. Next, a binormal vector bn for each node is generated on the basis of a vector product txn or nxt using the normal vector n and the tangent vector t. Although the binormal vector bn is orthogonal to the tangent vector t and the normal vector n, the tangent vector t and the normal vector n are not necessarily orthogonal to each other. Therefore, there is generated a fourth vector f that is orthogonal to both the binormal vector bn and the tangent vector t. The fourth vector f is generated, for instance, as a vector product txbn or bnxt.

A rotation matrix A is created such that the components of the tangent vector t are the components of the first column, the components of the binormal vector bn are the components of the second column, and the components of the fourth vector f are the components of the third column. The basic polygonal shape is rotated by applying the rotation matrix A to vertices of the basic polygonal shape. A cross-section polygonal shape is obtained as a result. The center of the obtained cross-section polygonal shape is translated towards the node. The size of the cross-section polygonal shape is modified for each node in case that the thread thickness varies depending on the node. Taking a basic polygonal shape for each loop, the positions of the vertices relative to the center of the basic polygonal shape are represented by position vectors vi0, wherein i denotes the vertex number, and 0 is the basic polygonal shape. The position vector of the i-th vertex at the j-th node can be determined by multiplying the position vector vi0 by the rotation matrix A, and by adding thereto the position vector of the j-th node. The position vectors of each vertex of the polygons can be determined thus as described above.

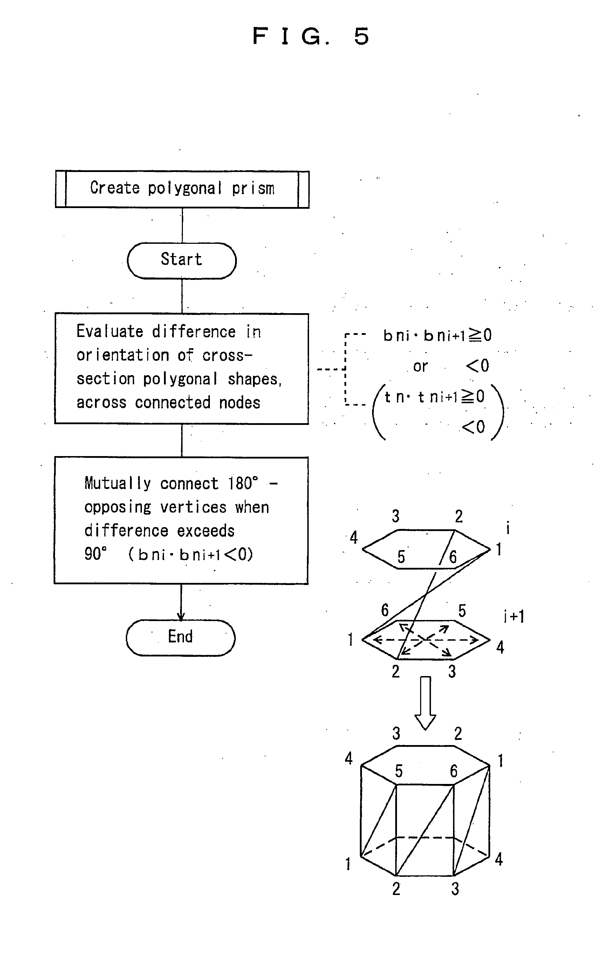

Fig. 5 illustrates a creation algorithm of a polygonal prism. The cross-section polygonal shapes across adjacent nodes are connected by polygons, and the orientation difference between the cross-section polygonal shapes is evaluated. The inner product of the binormal vector at each cross-section polygonal shape is used for evaluating the orientation difference. The value of the product can be divided into positive, 0 and negative. A negative value of the inner product means that the orientation of the binormal vector shifts by more than 90°. Significant twist is generated in this case.

The orientation of the cross-section polygonal shape can also be expressed by the tangent vector, besides the binormal vector. The orientation difference may also be evaluated on the basis of the tangent vector. The 180°-opposing vertices across the nodes are connected to each other when, for instance the orientation difference between the binormal vectors exceeds 90°, or is 90° or greater. In the example illustrated on the right of Fig. 5, for instance, the orientation of the cross-section polygonal shape is shifted by 180°. Twist is generated when a polygon is created by connecting same vertices to each other. When 180°-opposing vertices are connected to each other, by contrast, no twist is generated, as in the lower right of Fig. 5. The basic polygonal shape herein is hexagonal, but may also be tetragonal, pentagonal or octagonal.

Fig. 6 illustrates models of three types of loop. In a node model 60 on the left, a loop is represented by a plurality of nodes. Loop thread passes through the nodes. In a wire frame model 61, a cross-section polygonal shape is allocated to each node, and polygons are created in such a manner that the vertices of the cross-section polygonal shapes are joined to each other. The polygons illustrated in Fig. 6 are tetragonal, but triangular polygons are more advantageous in terms of data processing. The size of the cross-section polygonal shapes in Fig. 6 varies depending on the location, since thread is displayed thinner at portions where loops are in contact with other loops, as compared with other portions, owing to the loops being vertically linked to each other in the simulation. In the rendering model 62 on the right, texture mapping has been applied to the polygons, that have also been shaded and shadowed, and from which hidden surfaces have been removed.

Fig. 7 illustrates the relationship between the four vectors used in the embodiment. The size of all these vectors is 1. The normal vector n indicates the loop orientation, the tangent vector t indicates the thread orientation at each node, and the binormal vector bn indicates the orientation of the cross-section polygonal shape. The normal vector n is not necessarily orthogonal to the tangent vector t, for which reason there is created the fourth vector f.

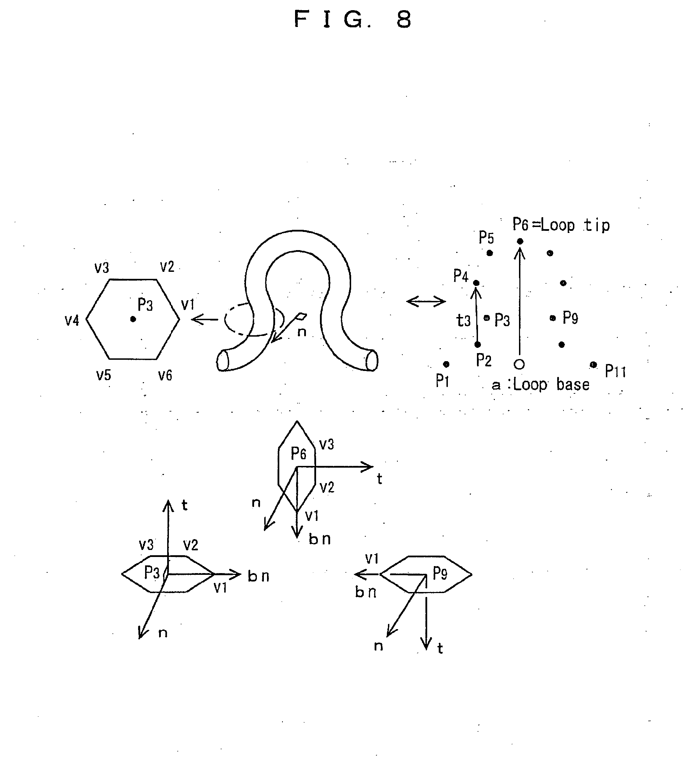

As illustrated in Fig. 8, each loop comprises a plurality of nodes, for instance about ten nodes P1 to P11. The position of each node is determined by establishing the vector a from the base of the loop to the tip of the loop. A cross-section polygonal shape is disposed at each node. The vertex v1 of the basic polygonal shape, for instance, faces the interior of the loop, while the side v5-v6 of the basic polygonal shape is orthogonal to the normal vector n. The basic polygonal shape is rotated by the rotation matrix A along the thread direction within the loop. The figure shows the tangent vector t and the binormal vector bn for several vertices.

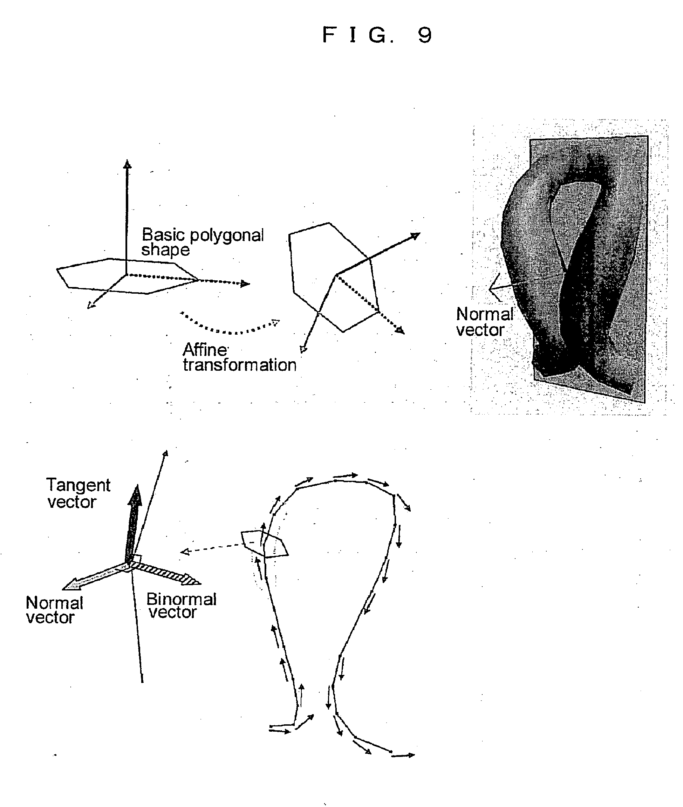

Fig. 9 illustrates a repetition of the same concept of Fig. 8. The basic polygonal shape becomes a cross-section polygonal shape by being displaced to each node by an affine transformation, such that the center of the cross-section polygonal shape is at the loop node. The tangent vector t at each node is set to be parallel to the vector that joins a previous and a subsequent node. Once the normal vector n and the tangent vector t are determined, a vector product thereof determines the binormal vector bn.

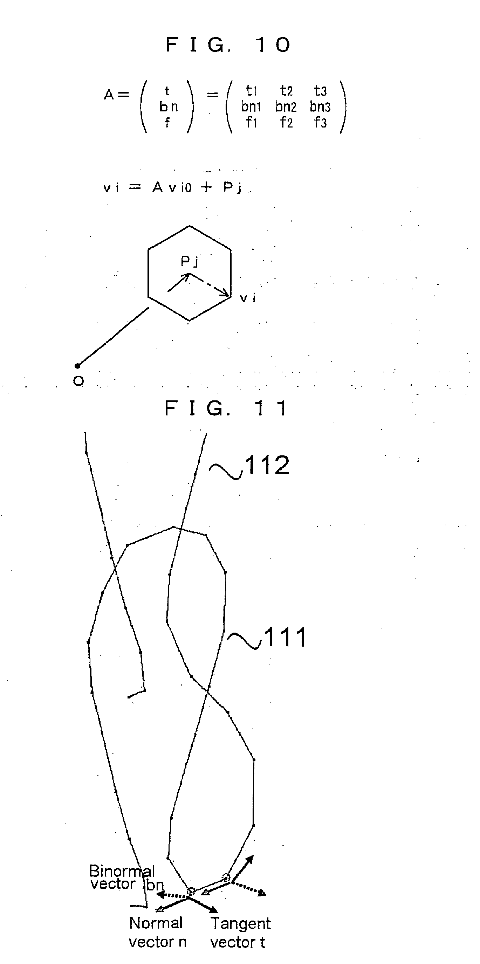

Fig. 10 illustrates an example of the rotation matrix A. An affine transformation matrix is obtained by adding the position vector of each node to the rotation matrix A. The orientation of the normal vector n is determined for each loop. The orientation of the basic polygonal shape becomes determined thereupon in accordance with the orientation of the normal vector n. The basic polygonal shape is rotated by the rotation matrix A, and the positions of the vertices of the i-th polygon at the j-th node are determined through translation by the position vector Pj of the node.

Fig. 11 illustrates an example of thread twist generation. In ordinary loops, the thread is joined to loops on the left and right. Twist, by contrast, is likely to occur at sites where the thread is joined to an upper and lower loop. In Fig. 11, the loops 111, 112 are vertically joined. Thread twist occurs in a prolongation portion at the boundary between these loops. This occurrence can be detected in the form of a reversal of the orientation of the binormal vector across adjacent nodes. Assuming the orientation of the normal vector n to be substantially the same in the loops 111, 112, then a mutual reversal of the orientations of the binormal vectors results in a substantial reversal of the orientations of the tangent vectors.

Fig. 12 illustrates thread twist and a process thereof. The loop arrangement is the same as that of Fig. 11. In one instance, twist is generated by joining to each other the vertices of the same cross-section polygonal shapes, disregarding the orientation of the binormal vector bn. This case is illustrated in (A). As illustrated in (B), twist can be eliminated through 180° rotation of the entire cross-section polygonal shape at the subsequent loop 112, and through connection with the last node of the loop 111. This is sufficient for cases where the texture of the thread has no directionality. However, in simulations of knitting of a plurality of threads by aligning the threads into a single thread, for instance in plating or the like, the thread texture exhibits directionality, and the front and the rear of the thread may exhibit dissimilar colors. In Fig. 12, the rendering of the thread changes from the front to the rear side. In (B), the front and rear are reversed at the loop 111 and the loop 112. In the case of plating, therefore, the problem is not solved by simply rotating the cross-section polygonal shape by 180° at the subsequent node.

Upon detection of twist in (C), opposing vertices are connected to each other across nodes. Twist can be eliminated as a result, so that the front-rear relationship of the thread does not become abnormal. The orientation of thread arguably rotates gradually when twist occurs in the simulation of an actual fabric: In the present embodiment, twist is eliminated in a single stage, but twist may also be eliminated over 180°, for example, as a result of three consecutive connections of vertices while the cross-section polygonal shape is shifted by 60° each time across nodes.

In the present embodiment, twist is considered to occur when the shift in orientation of the binormal vector or of the tangent vector exceeds 90°, but may also be considered to occur, for example, when the orientation shift exceeds about 60°, or exceeds about 120°, or exceeds about 180°. In the case of a shift of about 60°, there may be connected the vertices shifted by 60°, and in the case of a shift of about 120°, there may be connected the vertices shifted by 120°. In the case of a shift of about 180°, there may be connected opposing vertices. In this case, it is necessary to detect which side is shifted, to which end the side to which the binormal vector is to be rotated at the subsequent node, with respect to the binormal vector at the original node, may be determined on the basis of a vector product.

Fig. 13(A) illustrates simulation results without twist correction, and (B) illustrates simulation results with twist corrected in accordance with the present embodiment. The sites marked with a circle in (A) correspond to twist portions that can be detected under the naked eye when the flow of thread is checked loop by loop. This kind of unnatural twist is eliminated in (B). Accurate simulations can be conducted as a result to study thread flow in detail.

Fig.14 illustrates the orientation of a basic polygonal shape. The orientation of, for instance, hexagonal basic polygonal shapes is set in such a manner that vertices v1 face towards the interior of the loop. As a result, one side of the basic polygonal shape is parallel to the loop surface. For instance, the orientations of the normal vectors of loops 143, 144, at a front face portion and at a side face portion, are both right angles in a circumference 142 of a tubular garment 141. The orientation of the basic polygonal shape is established in accordance with these normal vectors. The orientation difference of the basic polygonal shapes is visualized by shading. When the loops 143, 144 are struck by light from a light source, for instance, the directions in which light is reflected is dissimilar, as shown by the dot-dashed lines in Fig. 14. The loop 143 at the front and the loop 144 at the side are perceived differently as a result. The orientation of the loops can thus be rendered realistically by way of a shaded image.

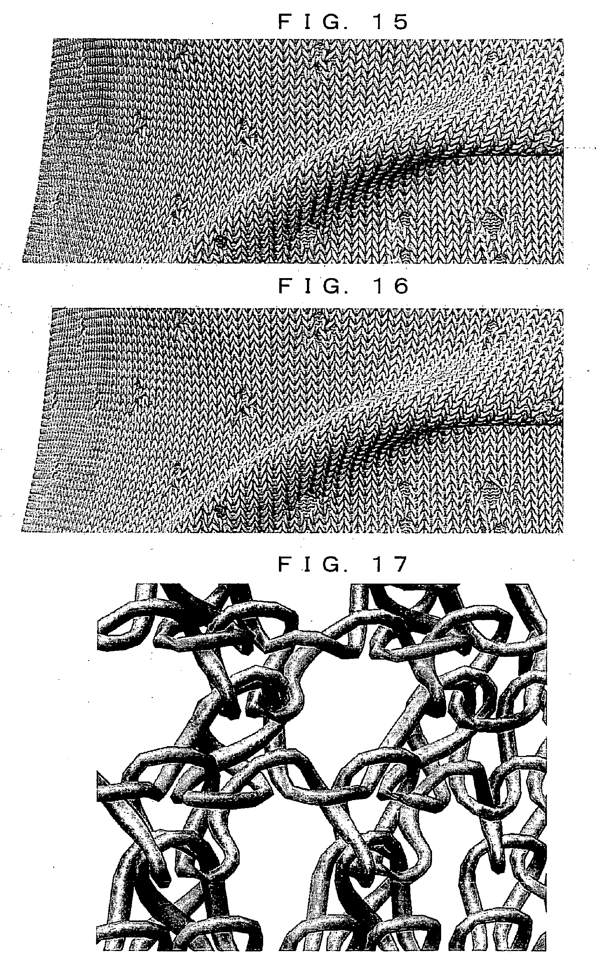

Fig. 15 illustrates an example in which the orientation of a basic polygonal shape is modified in accordance with the normal vector of a loop; and Fig. 16 illustrates an example in which the orientation of the basic polygonal shape is common to the entire garment. Both images are already-shaded images. In Fig. 15, the loops on the side face can be rendered realistically. In Fig. 16, by contrast, the loops on the side face have an altered texture, and _ lack fineness.

The explanation of thread twist in the examples dealt with a case in which the loops are joined vertically (Figs. 12 and 13), but other instances of thread twist may also occur. Fig. 17 illustrates thread twist occurring in a simulation of a mesh pattern. Mesh patterns have numerous loop transfers. As shown in Fig. 17, twist is likely to occur at the base of a loop when a needle loop overlaps back and forth to the left and right of a loop. Twist is also likely to occur when the base of the loop is open to the left and right. These kinds of twist are instances of simulation twist, not twist that occurs in an actual knitted fabric. The present embodiment allows detecting thread twist and displaying twist-free simulation results also in such cases.

The following effects are elicited in the present embodiment.
1) Since thread twist is corrected, practical simulations can be conducted also when the thread line is to be checked stitch by stitch.
2) Twist is eliminated by connecting different vertices of cross-section polygonal shapes. This allows carrying out accurate simulations, also in case where thread varies in the cross-section direction, for instance in simulations of plating.
3) The loops on side faces of tubular fabrics can also be rendered realistically by modifying the orientation of the basic polygonal shapes in accordance with the orientation of the loops.

## Claims

1. A knit simulation device (2) simulating a knit fabric knitted according to design data in such a manner that individual threads of the fabric are three-dimensionally displayed,
the knit simulation device **characterized by** comprising:
means for obtaining, per one loop (111, 112; 143, 144), a plurality of nodes (p) that denoting thread positions in a loop (111, 112, 143, 144) of the fabric;
cross-section disposing means for disposing a respective cross-section of the thread at each node (p);
connection means for connecting the disposed cross-sections to each other at corresponding portions between the cross-sections;
detection means (35) for detecting twist between the corresponding portions; and
twist elimination means for, upon twist detection, connecting to each other non-corresponding portions between the cross-sections, or for rotating one cross-section to connect corresponding portions to each other.

2. The knit simulation device according to claim 1, **characterized in that** the cross-sections are polygonal shapes, the connection means connects to each other the same vertices of the polygonal shapes, and the twist elimination means connect to each other different vertices of the polygonal shapes.

3. The knit simulation device according to claim 2, **characterized by** further comprising rotation means (34) for rotating the polygonal shape in accordance with the orientation of thread in a loop (111, 112, 143, 144),
the detection means (35) detecting twist in the form of a sudden change of the orientation of the polygonal shapes at or beyond predetermined conditions.

4. The knit simulation device according to claim 3, **characterized in that** the fabric is a tubular fabric, and **characterized in that** the knit simulation device further comprises means for modifying the orientation of a basic polygonal shape, to which the polygonal shape is referred, in accordance with a normal direction of the loop (111, 112, 143, 144), and the rotation means (34) rotates the basic polygonal shape in accordance with the orientation of thread in the loop (111, 112, 143, 144), to yield the polygonal shape at the cross-section.

5. A method for correcting thread twist in knit simulation in which a knit fabric knitted according to design data is simulated in such a manner that individual threads of the fabric are three-dimensionally displayed,
the method being **characterized by** comprising:
obtaining, per one loop (111,112,143,144), a plurality of nodes (p) that denote thread positions in a loop (111, 112, 143, 144) of the fabric;
disposing a respective cross-section of the thread at each node (p);
connecting the disposed cross-sections to each other at corresponding portions between the cross-sections;
detecting twist between the corresponding portions; and
upon twist detection, connecting to each other non-corresponding portions between the cross-sections, or for rotating one cross-section to connect corresponding portions to each other.
